# EUROPEAN PATENT SPECIFICATION

(11) **EP 2 519 867 B1**
(45) Date of publication and mention of the grant of the patent: **15.05.2019**
(21) Application number: 10801074.5
(22) Date of filing: 27.12.2010
(51) Int. Cl.: G06F 3/043, G06F 1/32

(54) **INTERACTIVE WHITEBOARD WITH WIRELESS REMOTE CONTROL**
INTERAKTIVE WEISSWANDTAFEL MIT DRAHTLOSER FERNSTEUERUNG
TABLEAU BLANC INTERACTIF AVEC DISPOSITIF DE COMMANDE À DISTANCE SANS FIL

(30) Priority: 29.12.2009 US 290733 P
(43) Date of publication of application: 07.11.2012
(73) Proprietor: Boxlight Corporation, Lawrenceville, Georgia 30046 (US)
(72) Inventor: CACIOPPO, Christopher, M., Somerville, MA 02144 (US)
(74) Representative: WP Thompson
(86) International application number: PCT/US2010/062139
(87) International publication number: WO 2011/090695

(56) References cited:
- WO-A2-03/015015
- WO-A2-2006/001985
- US-A- 4 777 329
- US-A1- 2003 151 596
- US-A1- 2008 172 504
- US-A1- 2009 158 065

## Description

### TECHNICAL FIELD

The present disclosure relates generally to an interactive whiteboard system. More particularly, the disclosure is directed to a digitizing system for facilitating interaction between a computer and a whiteboard surface, in which the digitizing system operates to control an associated projector or screen.

### BACKGROUND

Interactive whiteboard technologies allow a user to interact with a presentation display. In some instances, the interactive whiteboard also allows the capture and storage of handwritten notes. These systems generally accomplish interaction using a digitized writing surface and/or a spatial recognition pen. Typically, electronic whiteboards having digitized surfaces either photocopy the entire writing surface or serve as the actual input device, recording the movements of a pen or stylus along the surface of the board. Spatial recognition pens record the movement of the pen (or other stylus) across a writing surface, which surface typically must include special marking for the pen to recognize its position. Newer systems track the movement of a stylus across any surface using technology embedded in the stylus. One such system, which uses ultrasonic position tracking, is described in U.S. Patent No. 7,109,979, entitled "System and Method for Recording Writing Performed on a Surface". In some interactive whiteboard systems, a projector attached to a computer projects an image onto a whiteboard surface, allowing a user to interact with the computer using the stylus. In other interactive whiteboard systems, a flat-panel monitor duplicates or replaces the display of the attached computer, and also allows the user to interact with the computer using the stylus. Additional features of interactive whiteboard systems are described in U.S. Patent Nos. 6,100,877, 6,104,387, 6,124,847, 6,147,681, 6,177,927, 6,191,778, 6,211,863, 6,217,686, 6,232,962, 6,292,180, and 6,310,615. International application WO 2006/001985 A2 relates to an interactive tray system enabling a single, transferable interactive unit to be fastened to a communication medium, turning it into a fully interactive medium.

International application WO 03/015015 A2 relates to a method for determining the position in three-dimensional space of pen-shaped pointing devices.

### BRIEF DESCRIPTION OF THE DRAWINGS

Fig. 1A depicts an exemplary writing surface, capture bar, charging tray, and stylus that may be used with the presently described system;
Fig. 1B depicts a more detailed view of the capture bar depicted in Fig. 1A;
Fig. 1C illustrates the functionality of the capture bar depicted in Fig. 1B;
Fig. 2 illustrates an embodiment of the presently described system;
Fig. 4 depicts a block diagram of an embodiment of the presently described system; and
Fig. 5 depicts a cross-sectional view of the capture bar depicted in Fig. 1B.

### DETAILED DESCRIPTION

The present disclosure relates to a digitizing system for recording movements of a stylus across a surface and, in particular, to a capture bar for use with the system, which capture bar includes an infrared transmitter for transmitting commands to a projector or display associated with the digitizing system. The digitizing system digitizes the movement of the stylus across the surface by tracking the stylus using signals such as infrared signals, ultrasonic signals, and the like. The movements of the stylus across the surface may include the formation or modification of any type of image by the stylus, including printing, drawings, sketching, erasing, etc. The surface across which the digitizing system tracks movement of the stylus may be any suitable surface including, but not limited to, dry erase boards, chalk boards, clipboards, desktops, walls, projection screens, flip chart tablets, and glass panels, regardless of whether any of these surfaces is covered by a material such as paper, glass, metal, or plastic, which can be written upon. The surface is preferably relatively smooth and relatively flat, though the surface may have a small degree of curvature.

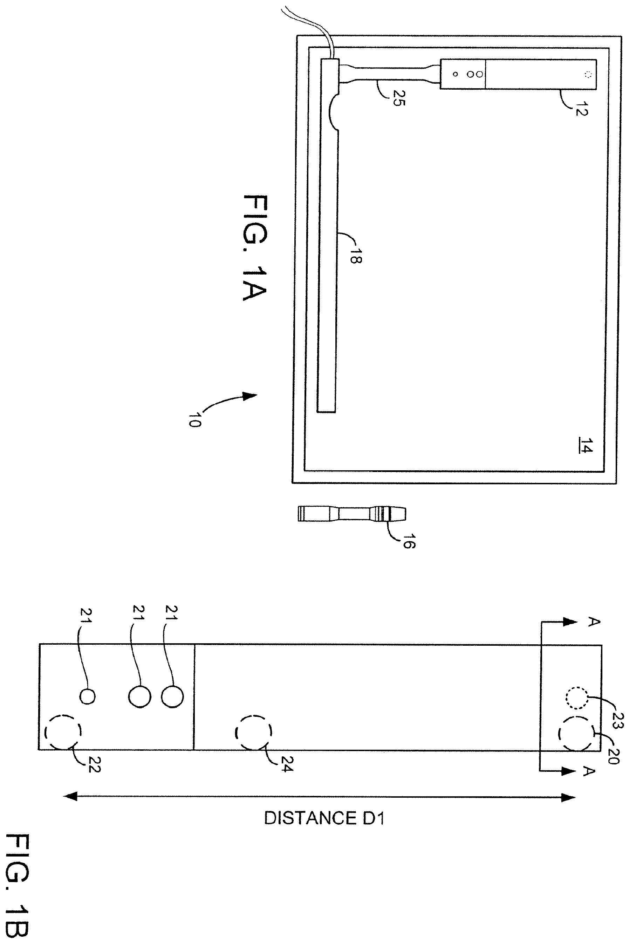

Fig. 1A illustrates an exemplary portion of a digitizing system 10 in accordance with the present description. The digitizing system 10 includes a capture bar 12 (also known as a tracking and communication unit (TCU)), a writing surface 14, a stylus 16, and a stylus charging station 18. Fig. 1A depicts the writing surface 14 as a dry erase board (i.e., a "whiteboard") though, as noted above, the writing surface 14 may be any desired surface. Although Fig. 1A illustrates the writing surface 14 as a vertical surface, it should be noted that the writing surface 14 could also be a horizontal surface, as the orientation of the surface is irrelevant to operation of the digitizing system 10. The digitizing system 10 tracks the movements of the stylus 16 across the writing surface 14. However, it is not necessary that the movement of the stylus 16 creates any mark on the writing surface 14 for the system 10 to operate to digitize the movements of the stylus 16. Moreover, while many of the embodiments described herein are described with reference to a dry erase board such as that depicted in Fig. 1A, and an accompanying dry erase stylus, the stylus 16 may be any desired stylus. For example, in some embodiments, the stylus 16 operates as a pointing device (e.g., a mouse) and not a marking device, and the system 10 digitizes the movement of the stylus 16 across a projector screen (not shown), which allows the system 10 to be used with a computer (not shown) and a projector (not shown).

In any event, the stylus 16 is preferably wireless, to facilitate easy movement of the stylus 16 across the writing surface 14. As described below, the digitizing system 10, through the capture bar 12, processes signals received from the stylus 16 in order to track the movement of the stylus 16 across the writing surface 14. Of course, generation of the signals requires a transmitter and a power source for the transmitter. Thus, the stylus 16 may also include a battery and, in particular, a rechargeable battery. The system 10 includes the charging tray 18 for this purpose. Alternatively, the transmitter in the stylus 16 may receive power through a cable (i.e., a wired stylus).

Each of the capture bar 12 and the charging tray 18 may be mounted to the writing surface 14, though the charging tray 18 may also be mounted to any convenient surface, as its presence is not strictly required for proper operation of the digitizing system 10. In one embodiment, the writing surface 14 is a magnetic surface, such as a dry erase board that includes a steel plate, and one or both of the capture bar 12 and the charging station 18 are mounted to the writing surface 14 by an array of rare earth magnets (not shown). The rare earth magnets preferably exert a strong magnetic force over a short distance, providing sufficient force to hold the capture bar 12 and/or the charging station 18 to the writing surface 14 (or other surface), but allowing relatively easy removal of the capture bar 12 and/or the charging station 18 from the writing surface 14 (or other surface). Of course, the capture bar 12 and/or the charging station 18 may be adhered to the writing surface 14 using any known method including, but not limited to, suction cups, hook-and-loop material, one or more individual magnets, adhesive tape, etc., depending on the writing surface 14, the permanence of the installation, cost, etc. For example, if the writing surface 14 is a glass window pane, suction cups may be preferable.

Fig. 1B illustrates in greater detail an embodiment of the capture bar 12. In the illustrated embodiment, the capture bar 12 tracks the position and/or movement of the stylus 16 across the writing surface 14 using ultrasonic and infrared signals transmitted by the stylus 16, and also receives additional information about the stylus 16 in the infrared signal. The capture bar 12 includes two ultrasonic sensors 20 and 22 separated by a fixed distance, D1, and an infrared sensor 24. When the stylus 16 is pressed against the writing surface 14, the stylus 16 emits both infrared and ultrasonic signals. The infrared sensor 24 receives the infrared signal, which identifies which stylus touched the surface (the system 10 may include numerous styli including, for example, different colors of writing styli, styli using different types of writing elements, styli with different width writing tips, a mouse stylus, etc.) using an encoded signal. The infrared signal received by the infrared sensor 24 also indicates to the capture bar 12 that the stylus 16 transmitted an ultrasonic signal. Meanwhile, the ultrasonic sensors 20 and 22 receive the ultrasonic signal transmitted by the stylus 16. The capture bar also includes various control buttons 21, and an infrared (IR) transmitter 23. The function of the IR transmitter 23 will be described in detail below.

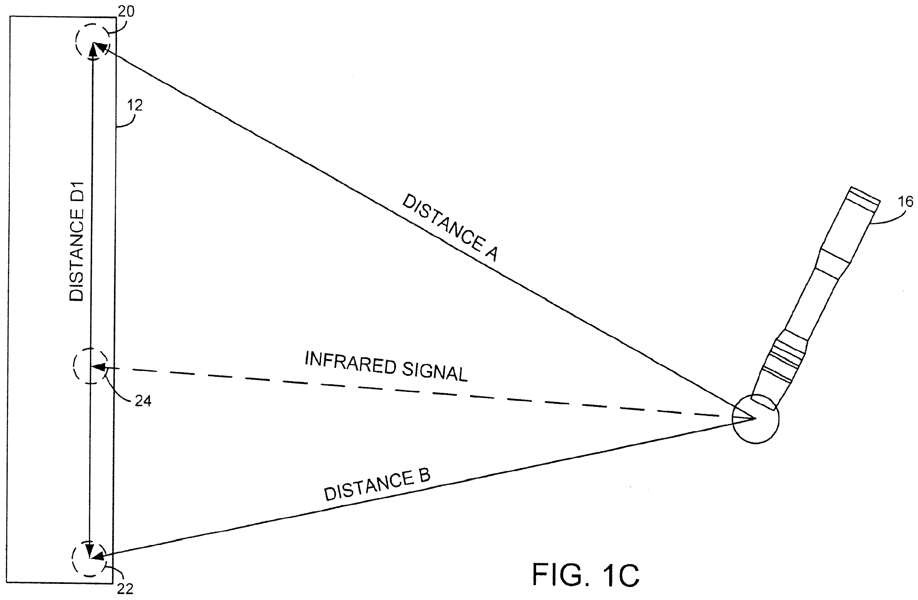

Fig. 1C illustrates the concept behind the method used by the capture bar 12 to track the stylus 16. Fig. 1C depicts the stylus 16 at a position, P, on the writing surface 14. As described above, upon being pressed against the writing surface 14, the stylus 16 transmits both an infrared signal and an ultrasonic signal. The infrared signal arrives at the infrared sensor 24 before the ultrasonic signals arrive at the ultrasonic sensors 20 and 22 because, of course, light travels faster than sound. The infrared signal, in addition to indicating to the capture bar 12 which stylus is in contact with the writing surface 14, also activates the ultrasonic sensors 20 and 22. The capture bar 12 uses the known time at which the stylus 16 transmitted the ultrasonic signals (i.e., the time at which the infrared sensor 24 received the infrared signal) and the time at which each of the ultrasonic sensors 20 and 22 received the ultrasonic signal to calculate the distance between the stylus 16 and the ultrasonic sensors 20 and 22. The capture bar 12 employs a computer processor (not shown) to calculate the location of the stylus 16 using basic trigonometric formulas. That is, knowing that the stylus 16 is a distance A from the ultrasonic sensor 20 and a distance B from the ultrasonic sensor 22, and knowing that a distance, D1, separates the ultrasonic sensors 20 and 22, the capture bar 12 can calculate the angles of the resulting triangle and, by doing so, the precise location of the stylus 16 on the writing surface 14.

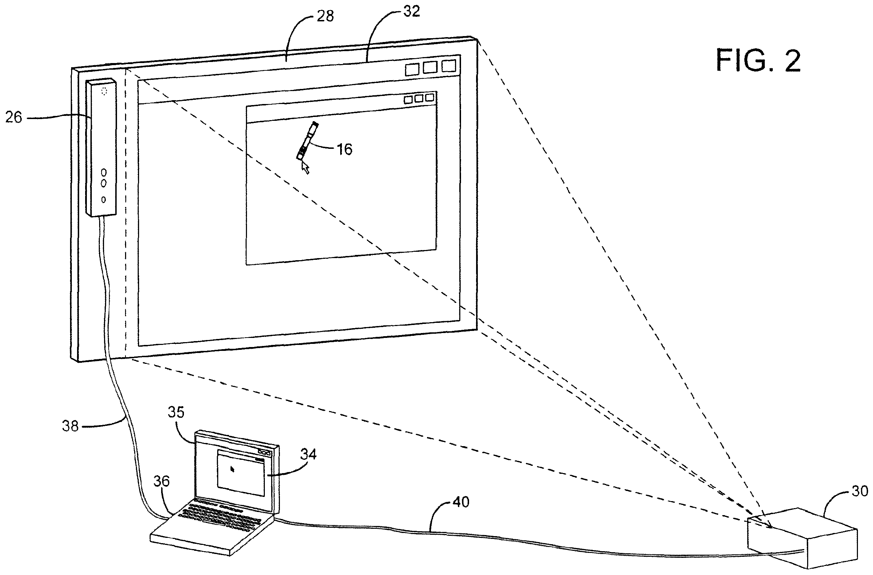

In some instances, the digitizing system 10 may be employed as an interface between a user and a computer (e.g., for controlling the computer or inputting information into the computer). Fig. 2 illustrates one such embodiment. In Fig. 2, a capture bar 26 is mounted on a surface 28, depicted as a projector screen or whiteboard onto which a projector 30 projects an image 32. The image 32 corresponds to an image 34 generated by a computer 36. The image 34 is transmitted to the projector 30 and may, additionally, be displayed on a display 35 associated with the computer 36. A connection 38 (e.g., a USB 1.0 connection, USB 2.0 connection, USB 3.0 connection, an IEEE-1394 connection, or any other suitable communication connection) may communicatively couple the capture bar 26 to the computer 36, and a connection 40 (e.g., a DVI connection, an S-video connection, a VGA or SVGA connection, or any other suitable communication connection) may communicatively couple the computer 36 to the projector 30. While each of the connections 38 and 40 is depicted as a wired connection, either or both of the connections 38 and 40 may, alternatively, be wireless connections. For example, a wireless connection, such as a wireless USB connection or a Bluetooth® connection, may implement the connection 38. Similarly, a protocol capable of transmitting video wirelessly (e.g., Wireless Home Digital Interface) may implement the connection 40. Of course, for a wireless connection, respective transceivers (not shown) would attach to (or be integrated with) the capture bar 26 and the computer 36 and/or the projector 30.

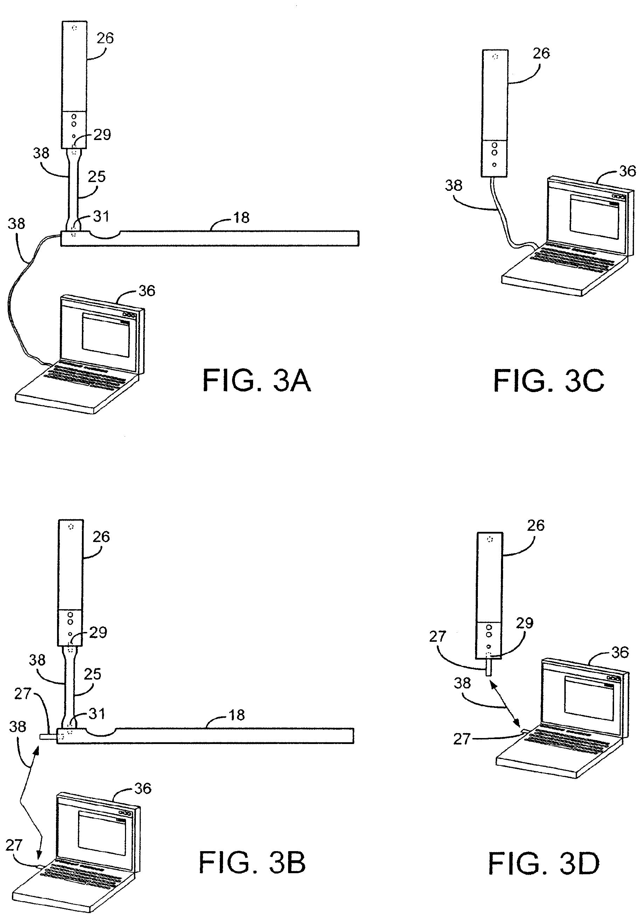

Moreover, in some embodiments, the connection 38 may include multiple connection segments. For example, and with reference to Figs. 3A-3D, the capture bar 26 may include a connection bar 25 coupling the capture bar 26 to the charging tray 18 (Figs. 3A, 3B). The connection bar 25 also ensures a correct relative positioning of the capture bar 26 and the charging tray 18. A wired (or wireless) connection may communicatively couple the charging tray 18 to the computer 36. In some embodiments in which the connection 38 is wireless (Figs. 3B, 3D), a transceiver dongle 27 may be connected directly to the capture bar 26 to provide wireless communication with a similar transceiver 27 attached to, or incorporated within, the computer 36. By way of example, the transceiver dongle 27 may connect to the capture bar 26 via a USB connector 29 to establish the connection 38 with the computer 36. In some embodiments that include the charging tray 18, the connection bar 25 may be communicatively coupled to the capture bar 26 via the USB connector 29, and may be communicatively coupled to the charging tray 15 via a USB connector 31. A wired or wireless connection may, in turn, communicatively couple the charging tray 18 to the computer 36. In this manner, a user may easily choose to implement wired communication (Figs 3A, 3C) or wireless communication (Figs. 3B, 3D) for the connection 38, and may also easily choose to include the charging tray 18 (Figs. 3A, 3B) or not include the charging tray 18 (Figs. 3C, 3D) in the system.

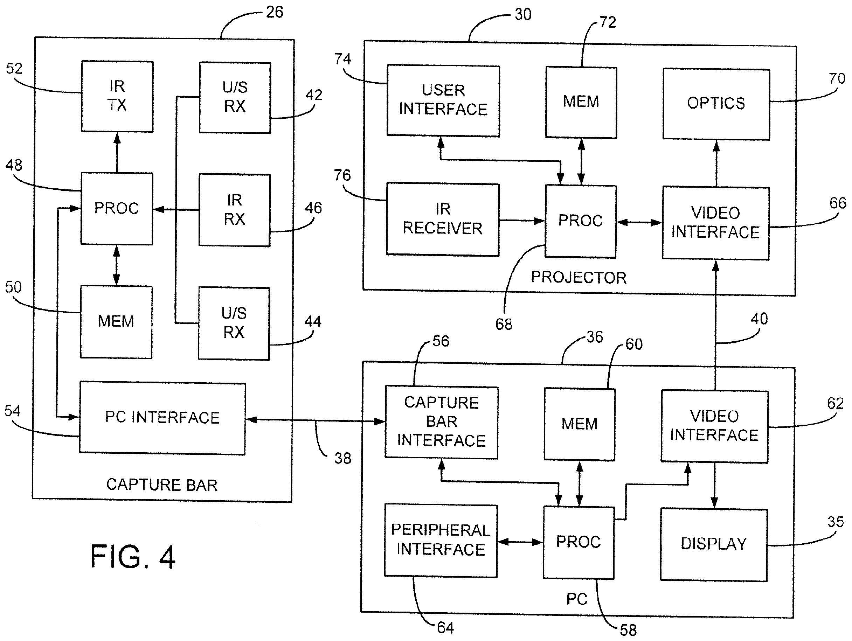

Fig. 4 depicts a block diagram of an embodiment of the system illustrated in Fig. 2. As described above, the capture bar 26 may include one or more receivers 42, 44, 46 for receiving signals from the stylus 16. In the depicted embodiment, the receivers 42, 44, 46 include two ultrasonic receivers 42, 44 and an infrared receiver 46. Each of the receivers 42, 44, 46 may be communicatively coupled to a processor 48. The processor 48 may receive data from each of the receivers 42, 44, 46 and may use the received data to calculate a current location of the stylus 16, determine an action associated with the stylus 16 (e.g., a button press), determine that a user is using the stylus, etc. The processor 48 may be communicatively coupled to (or integrated with) a memory 50 for storing instructions for executing various features and/or functions of the capture bar, information related to the data received from the receivers 42, 44, 46, including results of calculations in which the data are used, etc.

Additionally, the processor 48 may be communicatively coupled to an IR transmitter 52. The processor 48 may cause the IR transmitter 52 to transmit signals or codes, which signals or codes may cause a projector (such as the projector 30) or a display (not shown) to power on, to power off, to change modes, etc., in accordance with various conditions. For example, the processor 48 may cause the IR transmitter 52 to transmit a "power on" code when the processor 48 detects (e.g., via the IR receiver 46) that a user is using the stylus 16, or to transmit a "power off," "sleep," or "standby" code when the processor 48 detects a predetermined period of inactivity. Such pre-determined period of inactivity may, for example, be programmed by a user. As another example, the processor 48 may cause the IR transmitter 52 to transmit a "power on" code (or a "toggle power" code, a "toggle standby" code, or any other code) in accordance with a user command received from the computer 36 or from a button (not shown) on the capture bar 26. Of course, the capture bar 26 may implement appropriate hardware configuration and/or software algorithms to prevent the IR receiver 46 from detecting and/or responding to the signal output by the IR transmitter 52.

The processor 48 may also be communicatively connected to an interface 54 for connecting the capture bar to the computer 36 (i.e., via the connection 38). As described above, the connection 38 may be any appropriate connection known in the art including, by way of example and not limitation, a USB connection, a wireless USB connection, a Bluetooth® connection, etc. Accordingly, the interface 54 may include any appropriate hardware (or combination of hardware) for implementing the connection 38, and the memory 50 may include any appropriate instructions for implementing the connection 38 between the capture bar 26 and the computer 36.

The computer 36 may be any personal computer or workstation, as generally known in the art. While depicted in Fig. 2 as a laptop computer, the computer 36 may be a laptop computer, a desktop computer, a "netbook" computer, a workstation, a server, a hand-held computer such as a personal digital assistant or a smart phone, etc. The connection 38 communicatively connects the capture bar 26 to the computer 36 through the interface 54 and an interface 56, respectively. Like the interface 54, the interface 56 may include any appropriate hardware (or combination of hardware) for implementing the connection 38.

The interface 56 may be communicatively coupled to a processor 58 in the computer which may, in turn, be communicatively coupled to a memory 60, a video interface 62, and a peripheral interface 64. As a person of ordinary skill in the art would readily appreciate, the memory 60 may include one or more volatile memory devices, one or more non-volatile memory devices, and/or a combination of volatile and non-volatile memory devices. The memory 60 stores computer-readable instructions and/or data executed by the processor 58 as one or more programs or applications including, by way of example and not limitation, an operating system, device drivers, word processors, Internet browsers, etc. The memory 60 may also store computer-readable instructions and/or data for operating and/or using the digitizing system 10. For example, the memory 60 may include computer-readable instructions allowing the processor 58, in some embodiments, to control the IR transmitter 52 directly, or to upload to the memory 50 codes for the IR transmitter 52.

The video interface 62 may include hardware and/or software for receiving information from the processor 58 and rendering and outputting a display signal. The display signal may be output to the display 35, which may include an integrated display (such as in a laptop computer) or an external display (as commonly found on desktop computers). The video interface 62 may include a second output for establishing the connection 40 to the projector 30 or display screen. Alternatively, the video interface 62 may forego outputting the display signal to the display 35 of the computer 36.

In any event, the connection 40 communicatively couples the computer 36 to the projector 30 via the video interface 62 in the computer 36 and a video interface 66 in the projector 30. The video interface 66 may include hardware and/or software for receiving a signal from the video interface 62. Additionally, the video interface 66 may include hardware and/or software for communicating with a processor 68 in the projector 30 and for rendering and outputting an image to projector optics 70 (e.g., lenses, focusing rings, display elements, etc.). The processor 68, in addition to being communicatively coupled to the video interface 66, may be communicatively coupled to one or more of a memory 72, a user interface 74, and an IR receiver 76. The memory 72 may include one or more volatile memory devices, one or more non-volatile memory devices, and/or a combination of volatile and non-volatile memory devices. The memory 72 may store computer-readable instructions and/or data executed by the processor 68 to implement the projection and/or control functions of the projector 30.

The user interface 74 of the projector 30 may include any buttons and/or switches used to control the functionality of the projector 30. The IR receiver 76 may be integrated as part of the user interface 74, or may be a separate component connected directly to the processor 68. In any event, the IR receiver 76 and the processor 68 cooperate to allow a user to perform (or cause the projector 30 to perform) certain functions (e.g., powering on, powering off, entering standby mode, changing resolution, etc.). In particular, if an IR signal detected by the IR receiver 76 corresponds to a control code associated with a command or function of the projector 30, the processor 68 will cause the projector 30 to execute the command or function. Additionally, one or both of the user interface 74 and the processor 68 may be coupled, for example through the connection 40, to the personal computer 36, which may allow certain functions and/or features of the projector 30 to be controlled directly from the computer 36. For example, in one embodiment, the processor 58 may send a command through the connection 40 to cause the projector 30 to power on. As another example, a change in the video signal that indicates a change in the displayed image 32 (see Fig. 2) may cause the projector 30 to "wake" if the projector 30 was in a "sleep" or a power-saving standby mode.

Typically, each manufacturer (i.e, each make) of audio-visual devices such as televisions, recorders, receivers, etc. has a code or set of codes, implemented by the devices produced, for controlling the device via the IR receiver. Different models and or types of devices may implement different codes of the set of codes (e.g., a projector and a television may implement different codes though manufactured by the same company). Accordingly, in order that the capture bar 26 may perform certain control functions of the projector 30 by transmitting a signal from the IR transmitter 52, the processor 48 in the capture bar 26 (or the processor 58 in the computer 36) must be programmed to use the codes for the particular make and model projector 30. The digitizing system 10 may determine which codes to use for the particular make and model projector 30 in various ways. In some embodiments, a user inputs, via a software user interface or control panel operating on the computer 36, the make (i.e., the manufacturer) and model of the projector 30 and, accordingly which set of codes should be transmitted from the IR transmitter 52 to perform various functions. Alternatively, or in addition, computer 36 (or the processor 48) may execute an automatic setup routine to determine the set of codes that should be transmitted from the IR transmitter 52 to perform various functions. For example, the computer 36 may, via the connection 40, automatically determine the make and model of the projector 30. In some embodiments, the set of IR transmitter codes corresponding to the make and model of the projector 30 (or a subset of the set of codes) is stored on the memory 50 of the capture bar 26. In some embodiments, the codes may be requested by and/or transmitted to the capture bar from the computer 36 each time a signal is transmitted from the IR transmitter 52.

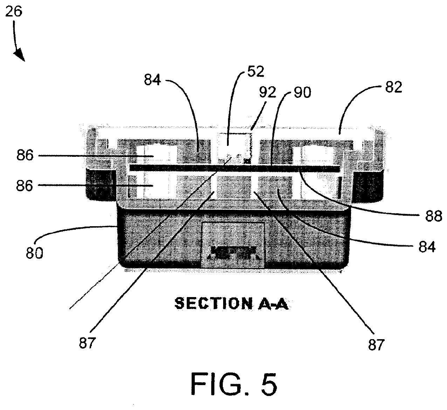

The IR transmitter 52 may or may not be visible to the user. Fig. 5 depicts a cross-sectional view of a capture bar 26 in accordance with the present description, taken along the line A-A in Fig. 1B. The capture bar 26 includes a body 80, a faceplate 82, and a component area 84 between the body 80 and the faceplate 82. Mounting hardware 86 and/or supports 87 may secure within the component area 84 a printed circuit board (PCB) 88 having electrically connected thereto various components (e.g., the processor 48, the memory 50, the receivers 42, 44, 46, the interface 54, etc.). The IR transmitter 52 may be mounted on a planar surface 90 of the PCB 88 that is proximate to the faceplate 82, such that the radiation emitted from the IR transmitter 52 radiates in a direction generally orthogonal to the planar surface 90 of the PCB 88. The faceplate 82 may have a window 92 disposed within the faceplate so as to permit the radiation emitted from the IR transmitter 52 to pass through faceplate 82 relatively unobstructed. The window 92 may be a separate piece of material, different from the material from which the faceplate 82 is formed, or the window 92 may be a portion of the faceplate 82 having a lesser thickness than the remainder of the faceplate 82. In any event, the window 92 and the IR transmitter 52 should each be positioned to align with the other. In some embodiments, multiple IR transmitters 52 may be included to radiate in different directions, thereby accommodating various positions of the capture bar 26 relative to the projector 30.

Moreover, in some embodiments, the capture bar 26 may include one or more radio-frequency (RF) transmitters (not shown) instead of, or in addition to, the IR transmitter 52. The RF transmitters may operate in a manner similar to the IR transmitter 52, in that the RF transmitters may operate to control one or more remote devices, such as the projector 30, when such devices have an RF remote control interface instead of, or in addition to, an IR remote control interface. In some embodiments, an RF device in the capture bar 26, used to establish the connection 38, may also serve to transmit signals for remotely controlling the projector 30. As just one example, the digitizing system 10 may employ a Bluetooth® transceiver (not shown) in the capture bar 26 to communicate with the computer 36 (i.e., to establish the connection 38). In such an embodiment, the Bluetooth® transceiver may also be capable of communicating with a Bluetooth®-enabled projector 30 to perform remote control of the projector 30.

Further, while the present disclosure describes the digitizer system as digitizing the movement of the stylus 16 through use of the capture bar 26, the use of a capture bar, per se, is not a necessary aspect of the presently described system. That is, the described system may be implemented in any digitizing system for use with a whiteboard, a projected display, etc., in which an auxiliary display device is used with the digitizing system. For example, a device having a digitizing module that connects through a computer interface to a computer may have, within the digitizing module or the computer interface, a remote control transmitter for controlling a display device. The digitizing module may include, by way of example and not limitation, the capture bar described above, one or more bezel-mounted sensors, a touch-sensitive surface, one or more imaging devices, etc., or any other means for detecting a user input on a display surface. Likewise, the display device may include, by way of example and not limitation, a flat-panel display (e.g., a liquid crystal display, a plasma display, an organic light emitting diode display, a light emitting diode display, an electroluminescent display, a surface-conduction electron-emitter display, a field emission display, etc.) or a projector (e.g., a cathode ray tube projector, a liquid crystal display projector, digital light processing detector, etc.) projecting an image onto a surface such as a whiteboard or a projection screen. In some embodiments, the digitizing system may not include a stylus, or may include a stylus that does not include a transmitter, such as when the digitizing system uses reflections from the stylus, a touch sensitive surface, etc., to determine the position of the stylus or other input device (e.g., a finger).

While the present disclosure describes specific embodiments intended to be illustrative only, and not limiting, it will be apparent to those of ordinary skill in the art that changes, additions, or deletions may be made to the disclosed embodiments without departing from the scope of the disclosure as defined by the appended claims.

## Claims

1. A capture bar (12) for use with a digitizing system, the capture bar comprising:
a plurality of first receivers (20, 22) operable to receive an ultrasonic location signal from a stylus (16) wherein the first receivers are ultrasonic receivers;
a second receiver (24) operable to receive a secondary signal, wherein the secondary receiver is an infrared receiver and the secondary signal is an infrared signal transmitted from the stylus (16) simultaneously to the ultrasonic signal, wherein the secondary signal received by the secondary receiver (24) indicates to the capture bar (12) that the stylus (16) has transmitted the location signal and activates the first receiver (20,22).
a processor (48) communicatively coupled to the first and second receivers and operable to determine a position of the stylus (16) from the location signal;
a computer interface (54) communicatively coupled to the processor (48) and operable to establish a communication channel between the capture bar (12) and a user computer (36), the communication channel operable to send and receive information from the user computer (36); and
a remote control transmitter (23; 52) operable to transmit wirelessly one or more codes to a display device (30), the one or more codes operable to cause the display device to perform a control function including at least one of powering on, powering off, entering standby mode, or changing resolution;
wherein the remote control transmitter transmits a power off, sleep or stand-by code upon the processor detecting a period of inactivity;
wherein the remote control transmitter transmits a power on code upon the processor detecting that the stylus is in use;
wherein the information received from the user computer (36) includes a set of codes corresponding to the make and model of the display device (30), and
wherein the signals transmitted by the remote control transmitter (23; 52) include a selected one of said set of codes.

2. The capture bar of claim 1, wherein the display device is a projection device.

3. The capture bar of claim 1 or claim 2, wherein the remote control transmitter is an infrared transmitter.

4. The capture bar of claim 1 or claim 2, wherein the remote control transmitter is a radio frequency transmitter.

5. The capture bar of any of claims 1 to 4, further comprising a memory device (60), coupled to the processor (48), having stored thereon instructions for causing the remote control transmitter (23; 52) to transmit the one or more signals.

6. A digitizing system comprising the capture bar as claimed in any of claims 1 to 4, and a stylus (16) comprising:
a power source; and
a first transmitter powered by the power source and operable to transmit a location signal; and a second transmitter operable to transmit a secondary signal,
wherein the location signal is an ultrasonic signal and the secondary signal is an infrared signal.

## Patentansprüche

1. Erfassungsleiste (12) zur Verwendung mit einem Digitalisierungssystem, wobei die Erfassungsleiste Folgendes umfasst:
eine Vielzahl erster Empfänger (20, 22), die wirksam sind, um ein Ultraschallortssignal von einem Eingabestift (16) zu empfangen, wobei es sich bei den ersten Empfängern um Ultraschallempfänger handelt;
einen zweiten Empfänger (24), der wirksam ist, um ein Sekundärsignal zu empfangen, wobei es sich bei dem Sekundärempfänger um einen Infrarotempfänger handelt und es sich bei dem Sekundärsignal um ein von dem Eingabestift (16) gleichzeitig mit dem Ultraschallsignal übermitteltes Infrarotsignal handelt, wobei das von dem Sekundärempfänger (24) empfangene Sekundärsignal der Erfassungsleiste (12) angibt, dass der Eingabestift (16) das Ortssignal übermittelt hat und den ersten Empfänger (20, 22) aktiviert.
einen Prozessor (48), der kommunikationsfähig an den ersten und den zweiten Empfänger gekoppelt ist und wirksam ist, um eine Lage des Eingabestifts (16) aus dem Ortssignal zu bestimmen;
eine Computerschnittstelle (54), die kommunikationsfähig an den Prozessor (48) gekoppelt ist und wirksam ist, um einen Kommunikationskanal zwischen der Erfassungsleiste (12) und einem Benutzercomputer (36) aufzubauen, wobei der Kommunikationskanal wirksam ist, um Informationen von dem Benutzercomputer (36) zu senden und zu empfangen; und
einen Fernsteuerungssender (23; 52), der wirksam ist, um einen oder mehrere Codes drahtlos zu einer Anzeigevorrichtung (30) zu übermitteln, wobei der eine oder die mehreren Codes wirksam sind, um die Anzeigevorrichtung zu veranlassen, eine Steuerfunktion auszuführen, die mindestens eines von Einschalten, Ausschalten, Wechseln in den Bereitschaftsmodus oder Ändern der Auflösung umfasst;
wobei der Fernsteuerungssender einen Ausschalt-, Schlaf- oder Bereitschaftscode übermittelt, wenn der Prozessor einen Zeitraum der Untätigkeit erkennt;
wobei der Fernsteuerungssender einen Einschaltcode übermittelt, wenn der Prozessor erkennt, dass der Eingabestift in Gebrauch ist;
wobei die von dem Benutzercomputer (36) her empfangenen Informationen einen Satz von Codes umfassen, die der Marke und dem Modell der Anzeigevorrichtung (30) entsprechen, und
wobei die von dem Fernsteuerungssender (23; 52) übermittelten Signale einen ausgewählten des Satzes von Codes umfassen.

2. Erfassungsleiste nach Anspruch 1, wobei es sich bei der Anzeigevorrichtung um eine Projiziervorrichtung handelt.

3. Erfassungsleiste nach Anspruch 1 oder Anspruch 2, wobei es sich bei dem Fernsteuerungssender um einen Infrarotsender handelt.

4. Erfassungsleiste nach Anspruch 1 oder Anspruch 2, wobei es sich bei dem Fernsteuerungssender um einen Funkfrequenzsender handelt.

5. Erfassungsleiste nach einem der Ansprüche 1 bis 4, weiter umfassend eine Speichervorrichtung (60), die an den Prozessor (48) gekoppelt ist, auf der Anweisungen zum Veranlassen des Fernsteuerungssenders (23; 52), das eine oder die mehreren Signale zu übermitteln, gespeichert sind.

6. Digitalisierungssystem, umfassend die Erfassungsleiste nach einem der Ansprüche 1 bis 4 und einen Eingabestift (16), umfassend:
eine Leistungsquelle; und
einen ersten Sender, der von der Leistungsquelle mit Leistung versorgt wird und wirksam ist, um ein Ortssignal zu übermitteln; und
einen zweiten Sender, der wirksam ist, um ein Sekundärsignal zu übermitteln, wobei es sich bei dem Ortssignal um ein Ultraschallsignal handelt und es sich bei dem Sekundärsignal um ein Infrarotsignal handelt.

## Revendications

1. Barre de capture (12) destinée à être utilisée avec un système de numérisation, la barre de capture comprenant :
une pluralité de premiers récepteurs (20, 22) servant à recevoir un signal d'emplacement ultrasonique en provenance d'un stylet (16), les premiers récepteurs étant des récepteurs ultrasoniques ;
un second récepteur (24) servant à recevoir un signal secondaire, le récepteur secondaire étant un récepteur infrarouge et le signal secondaire étant un signal infrarouge transmis par le stylet (16) simultanément au signal ultrasonique, dans laquelle le signal secondaire reçu par le récepteur secondaire (24) indique à la barre de capture (12) que le stylet (16) a émis le signal d'emplacement et active le premier récepteur (20, 22),
un processeur (48) couplé de manière communicante aux premier et second récepteurs et servant à déterminer une position du stylet (16) à partir du signal d'emplacement ;
une interface informatique (54) couplée de manière communicante au processeur (48) et servant à établir un canal de communication entre la barre de capture (12) et un ordinateur d'utilisateur (36), le canal de communication servant à envoyer et recevoir des informations depuis l'ordinateur d'utilisateur (36) ; et
un émetteur de télécommande (23 ; 52) servant à émettre en mode sans fil un ou plusieurs codes à destination d'un dispositif d'affichage (30), les un ou plusieurs codes servant à amener le dispositif d'affichage à réaliser une fonction de commande comportant au moins un d'une activation, d'une désactivation, d'un passage en mode de veille, ou d'un changement de résolution ;
dans laquelle l'émetteur de télécommande émet un code de désactivation, de repos ou de veille lorsque le processeur détecte une période d'inactivité ;
dans laquelle l'émetteur de télécommande émet un code d'activation lorsque le processeur détecte que le stylet est utilisé ;
dans laquelle les informations reçues en provenance de l'ordinateur utilisateur (36) comportent un ensemble de codes correspondant au constructeur et au modèle du dispositif d'affichage (30), et
dans laquelle les signaux émis par l'émetteur de télécommande (23 ; 52) comporte un code sélectionné dudit ensemble de codes.

2. Barre de capture selon la revendication 1, dans laquelle le dispositif d'affichage est un dispositif de projection.

3. Barre de capture selon la revendication 1 ou la revendication 2, dans laquelle l'émetteur de télécommande est un émetteur infrarouge.

4. Barre de capture selon la revendication 1 ou la revendication 2, dans laquelle l'émetteur de télécommande est un émetteur de radiofréquence.

5. Barre de capture selon l'une quelconque des revendications 1 à 4, comprenant en outre un dispositif de mémoire (60), couplé au processeur (48), sur lequel sont mémorisées des instructions pour amener l'émetteur de télécommande (23 ; 52) à émettre les un ou plusieurs signaux.

6. Système de numérisation comprenant la barre de capture selon l'une quelconque des revendications 1 à 4, et un stylet (16) comprenant :
une source d'alimentation ; et
un premier émetteur alimenté par la source d'alimentation et servant à transmettre un signal d'emplacement ; et un second émetteur servant à émettre un signal secondaire,
dans lequel le signal d'emplacement est un signal ultrasonique et le signal secondaire est un signal infrarouge.
